# EUROPEAN PATENT SPECIFICATION

(11) **EP 4 579 530 B1**
(45) Date of publication and mention of the grant of the patent: **30.09.2026**
(21) Application number: 24221305.6
(22) Date of filing: 18.12.2024
(51) Int. Cl.: G06N 3/0495, G06N 3/096, G06N 3/09, G06N 5/01, G06N 20/00, G06N 3/0464

(54) **MODEL QUANTIZATION METHOD AND APPARATUS, MEDIUM, AND ELECTRONIC DEVICE**
MODELLQUANTISIERUNGSVERFAHREN UND -VORRICHTUNG, MEDIUM UND ELEKTRONISCHE VORRICHTUNG
PROCÉDÉ ET APPAREIL DE QUANTIFICATION DE MODÈLE, SUPPORT ET DISPOSITIF ÉLECTRONIQUE

(30) Priority: 28.12.2023 CN 202311842056
(43) Date of publication of application: 02.07.2025
(73) Proprietor: BEIJING YOUZHUJU NETWORK TECHNOLOGY CO. LTD., Beijing 101299 (CN)
(72) Inventor: GUO, Ruoyu, Beijing, 100028 (CN)
(74) Representative: Marks & Clerk LLP

(56) References cited:
- CN-A- 113 225 282
- US-A1- 2017 322 281
- ZECHUN LIU ET AL: "BiT: Robustly Binarized Multi-distilled Transformer", ARXIV.ORG, CORNELL UNIVERSITY LIBRARY, 201 OLIN LIBRARY CORNELL UNIVERSITY ITHACA, NY 14853, 2 October 2022 (2022-10-02), XP091331989
- ZHUANG BOHAN ET AL: "Towards Effective Low-Bitwidth Convolutional Neural Networks", 2018 IEEE/CVF CONFERENCE ON COMPUTER VISION AND PATTERN RECOGNITION, IEEE, 18 June 2018 (2018-06-18), pages 7920 - 7928, XP033473713, DOI: 10.1109/CVPR.2018.00826
- KIM NAHSUNG ET AL: "Exploiting Retraining-Based Mixed-Precision Quantization for Low-Cost DNN Accelerator Design", IEEE TRANSACTIONS ON NEURAL NETWORKS AND LEARNING SYSTEMS, IEEE, USA, vol. 32, no. 7, 3 August 2020 (2020-08-03), pages 2925 - 2938, XP011864523, ISSN: 2162-237X, [retrieved on 20210706], DOI: 10.1109/TNNLS.2020.3008996

## Description

### CROSS-REFERENCE TO RELATED APPLICATION

This application claims the priority to and benefits of the Chinese Patent Application, No. 202311842056.7, which was filed on December 28, 2023.

### TECHNICAL FIELD

The present disclosure relates to the field of computer technologies, and in particular, to a model quantization method and apparatus, a medium, and an electronic device.

### BACKGROUND

Model quantization refers to converting a floating-point computing model into a low-bit fixedpoint computing model, thereby effectively reducing computing intensity, parameter size, and memory consumption of the model. However, in the related art, regardless of which model quantization technology is used, huge precision loss is inevitably brought to the model. Therefore, how to quantize the model while maintaining the precision of the model unchanged or with only a small precision loss becomes a technical problem to be solved urgently.

ZECHUN LIU ET AL, "BiT:: Robustly Binarized Multi-distilled Transformer", ARXIV.ORG, CORNELL UNIVERSITY LIBRARY, 201 OLIN LIBRARY CORNELL UNIVERSITY ITHACA, NY 14853, 2 October 2022, discloses a series of improvements that enables binary transformers at a much higher accuracy than what was possible previously. These include a two-set binarization scheme, a novel elastic binary activation function with learned parameters, and a method to quantize a network to its limit by successively distilling higher precision models into lower precision students.

ZHUANG BOHAN ET AL, "Towards Effective Low-Bitwidth Convolutional Neural Networks", 2018 IEEE/CVF CONFERENCE ON COMPUTER VISION AND PATTERN RECOGNITION, IEEE, 18 June 2018 (2018-06-18), pages 7920-7928, DOI: 10.1109/CVPR.2018.00826, tackles the problem of training a deep convolutional neural network with both low-precision weights and low-bitwidth activations. Optimizing a low-precision network is very challenging since the training process can easily get trapped in a poor local minima, which results in substantial accuracy loss. To mitigate this problem, three simple-yet-effective approaches are proposed to improve the network training. First, it is proposed to use a two-stage optimization strategy to progressively find good local minima. Second, another progressive optimization approach which progressively decreases the bit-width from high-precision to low-precision during the course of training is proposed. Third, a novel learning scheme is adopted to jointly train a full-precision model alongside the low-precision one.

KIM NAHSUNG ET AL, "Exploiting Retraining-Based Mixed-Precision Quantization for Low-Cost DNN Accelerator Design", IEEE TRANSACTIONS ON NEURAL NETWORKS AND LEARNING SYSTEMS, IEEE, USA, vol. 32, no. 7, 3 August 2020 (2020-08-03), pages 2925-2938, ISSN: 2162-237X, DOI: 10.1109/TNNLS.2020.3008996, presents a retraining-based mixed-precision quantization approach and its customized DNN accelerator to achieve high energy efficiency. In the proposed quantization, in the middle of retraining, an additional bit (extra quantization level) is assigned to the weights that have shown frequent switching between two contiguous quantization levels since it means that both quantization levels cannot help to reduce quantization loss. The gradient noise that occurs in the retraining process is also mitigated by taking a lower learning rate near the quantization threshold.

CN113225282A provides a communication signal modulation recognition method based on a BP neural network, belonging to the field of communication signal processing. The method includes: obtaining the original modulated signal, which includes six types of signals: 2ASK, 4ASK, 2PSK, 4PSK, 2FSK, and 4FSK; using a signal preprocessing module to segment and denoise the original modulated signal; extracting feature parameters based on the processing results from the previous step and constructing a multi-dimensional vector as the training set, where the feature parameters include five instantaneous statistical parameters: γₘₐₓ, σₐₐ, σ_{af}, σₐₚ, and σ_{dp}; building a neural network model; reconstructing the signal and feature parameter vector as a test set, and using the test set for signal recognition; simulating the recognition performance of the test set; classifying and recognizing each signal; and calculating the recognition accuracy. This method performs zero-centering and normalization on all feature parameter data, transforming the data to the same order of magnitude for comparison, thereby improving the comparability of the data.

US2017322281A1 discloses a method for the determination of diffusion gradients for recording diffusion-weighted magnetic resonance image data with anisotropic diffusion directions. It also discloses a method for recording diffusion-weighted magnetic resonance image data of an object under examination, diffusion-gradient-determining computer, and a magnetic resonance system.

### SUMMARY

This Summary is provided to introduce the concepts in a simplified form that are further described below in the Detailed Description. This Summary is not intended to identify key features or essential features of the claimed subject matter, nor is it intended to be used to limit the scope of the invention, which is defined by the appended claims.

According to a first aspect, the present disclosure provides a model quantization method, in accordance with independnet claim 1.

According to a second aspect, the present disclosure provides a model quantization apparatus, in accordance with independent claim 2.

According to a third aspect, the present disclosure provides a computer-readable medium, in accordance with independent claim 3.

Based on the above technical solution, by quantizing an initial model according to an initial quantization bit width to obtain a quantized model, using the initial model as a teacher model of the quantized model, and performing distillation training on the quantized model to obtain a trained quantized model, and then reducing the initial quantization bit width to obtain a target quantization bit width, and using the target quantization bit width as the initial quantization bit width and using the trained quantization model as the initial model, and continuing to quantize the initial model until the target quantization bit width reaches a target threshold, and determining the trained quantized model corresponding to the target quantization bit width that reaches the target threshold as a complete-trained quantized model, a model with a previous quantization bit width can be used as a teacher model of a current quantized model, and distillation training is performed on the current quantized model, so that it is ensured that the precision of the quantized model can be further improved. Moreover, by using the model with the previous quantization bit width as the teacher model of the current quantized model for distillation training, the distillation training can be performed by using models with little difference in parameters, thereby further ensuring the stability of the precision of the low-bit quantized model.

Other features and advantages of the present disclosure will be described in detail in the following Detailed Description section.

### BRIEF DESCRIPTION OF DRAWINGS

The above and other features, advantages, and aspects of the embodiments of the present disclosure become more apparent with reference to the following specific embodiments in conjunction with the accompanying drawings. Throughout the drawings, the same or similar reference numerals denote the same or similar elements. It should be understood that the accompanying drawings are schematic and that parts and elements are not necessarily drawn to scale. In the drawings:
Fig. 1 is a flowchart of a model quantization method according to some embodiments.
Fig. 2 is a detailed flowchart of step 120 shown in Fig. 1.
Fig. 3 is a detailed flowchart of step 123 shown in Fig. 2.
Fig. 4 is a flowchart of determining a first adaptive parameter and a second adaptive parameter according to some embodiments.
Fig. 5 is a schematic diagram of a structure of a model quantization apparatus according to some embodiments.
Fig. 6 is a schematic diagram of a structure of an electronic device according to some embodiments.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms and should not be construed as being limited to the embodiments set forth herein, but rather by the scope of the appended claims. Rather, these embodiments are provided for a more thorough and complete understanding of the present disclosure. It should be understood that the accompanying drawings and the embodiments of the present disclosure are only for exemplary purposes. The scope of protection is defined by the appended claims.

It should be understood that the various steps described in the method embodiments of the present disclosure may be performed in different orders, and/or performed in parallel. In addition, additional steps may be included and/or the execution of the illustrated steps may be omitted in the method embodiments. The above are limited by the scope of the appended claims.

The terms "include/comprise" and variations thereof as used herein are an open-ended inclusion, namely, "include/comprise but not limited to". The term "based on" means "at least partially based on". The term "an embodiment" means "at least one embodiment". The term "another embodiment" means "at least one another embodiment". The term "some embodiments" means "at least some embodiments". Related definitions of other terms will be given in the description below.

It should be noted that concepts such as "first", "second" or the like mentioned in the present disclosure are only used to distinguish different apparatuses, modules, or units, and are not intended to limit orders or interdependence relationships functions performed by these apparatuses, modules, or units.

It should be noted that modifications of "one" and "a plurality of" mentioned in the present disclosure are schematic rather than restrictive, and those skilled in the art should understand that otherwise explicitly stated in the context, it should be understood as "one or more".

The names of messages or information exchanged between a plurality of apparatuses in the embodiments of the present disclosure are used for illustrative purposes only, and are not indicated to limit the scope of these messages or information.

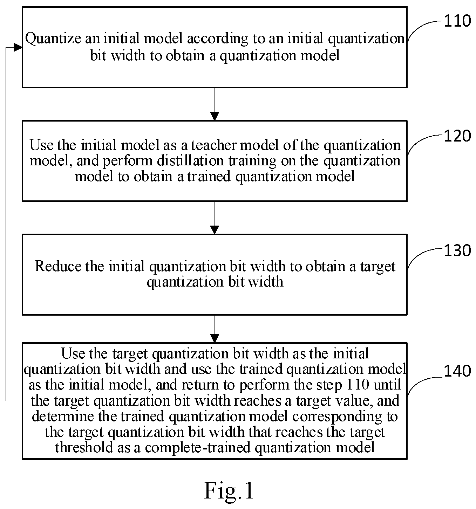

Fig. 1 is a flowchart of a model quantization method according to some embodiments. As shown in Fig. 1, an embodiment of the present disclosure provides a model quantization method, which may be performed by an electronic device, and specifically may be performed by a model quantization apparatus. The apparatus may be implemented in a software and/or hardware manner and configured in the electronic device. As shown in Fig. 1, the method may include the following steps.

In step 110, an initial model is quantized according to an initial quantization bit width to obtain a quantization model. In the present disclosure the term quantization model is understood as as a model that has been quantized according to a quantization bit width, i.e. a quantized model.

Here, model quantization refers to representing a weight or an activation value represented by a high bit width with a lower bit width. For example, a model represented by a bit width of Float32 may be quantized and represented as a model of int8 size. It should be noted that in model quantization, model parameters may be compressed, the size of the model may be reduced, the computing speed of the model may be increased, and the memory occupation of the model may be reduced, but precision loss is brought to the model.

The initial quantization bit width may be a parameter determined according to an original bit width corresponding to the initial model and used to quantize the initial model. For example, the original bit width corresponding to the initial model is 32 bits, and the initial quantization bit width may be 16 bits. Certainly, the size of the initial quantization bit width may also be set according to an actual situation.

The electronic device quantizes the initial model according to the initial quantization bit width to obtain a quantization model. The quantization model is a model obtained by quantizing the initial model by using the initial quantization bit width.

The initial model is one of an image-type model, a text-type model, and an audio-type model.

In other words, the model quantization method provided in the embodiments of the present disclosure may be used for quantization of models of types such as an image-type model, a text-type model, and an audio-type model. For example, a machine learning model of an image type, a machine learning model of a text type, a machine learning model of a sound type, and the like are quantized.

It should be noted that in the embodiments of the present disclosure, the machine learning model may be a neural network model, or a non-neural network model other than the neural network model, such as a decision tree and the like.

In step 120, the initial model is used as a teacher model of the quantization model, and distillation training is performed on the quantization model, to obtain a trained quantization model.

Here, a teacher model may be a pre-trained large model, and a student model may be a compressed lightweight small model. In knowledge distillation, the teacher model is an outputter of knowledge and provides the knowledge to the student model. The student model is a receiver of the knowledge and acquires the knowledge from the teacher model.

In the embodiment of the present disclosure, the initial model is used as the teacher model of the quantization model, and the quantization model is used as the student model of the initial model. It should be understood that the initial model has higher precision than the quantization model. Therefore, the initial model is used as the teacher model of the quantization model to improve the precision of the quantization model by using the initial model.

Using the initial model as the teacher model of the quantization model and performing distillation training on the quantization model means that in a training process of the quantization model, a parameter of the quantization model is adjusted by using a first loss between a prediction result of the quantization model and a ground-truth label corresponding to a training sample and a second loss between the prediction result of the quantization model and a prediction result of the initial model, to obtain the trained quantization model, thereby effectively improving the performance accuracy of the quantization model.

In step 130, the initial quantization bit width is reduced to obtain a target quantization bit width.

Here, the initial quantization bit width may be reduced according to a preset reduction amplitude to obtain the target quantization bit width. For example, the preset reduction amplitude is 2, and the initial quantization bit width is 16, and thus the target quantization bit width is 16 - 2 = 14.

Certainly, in other embodiments, the initial quantization bit width may also be reduced by using a quantization bit width list to obtain the target quantization bit width. For example, assuming that the quantization bit width list is: B_s=16,8,5,...,2, and the initial quantization bit width is 16, the target quantization bit width is a next parameter of the initial quantization bit width in the quantization bit width list, for example, the target quantization bit width is 8.

In step 140, the target quantization bit width is used as the initial quantization bit width, and the trained quantization model is used as the initial model, and the process returns to the step 110 until the target quantization bit width reaches a target threshold, and the trained quantization model corresponding to the target quantization bit width that reaches the target threshold is determined as a complete-trained quantization model .

Here, the target threshold refers to a preset quantization parameter, which may be set by the user according to an actual requirement. For example, the target threshold may be int2 bit or int4 bit.

After the target quantization bit width is obtained, the target quantization bit width is used as a new initial quantization bit width, and the trained quantization model is used as a new initial model, and the process returns to step 110 until the target quantization bit width is less than the target threshold. In other words, the initial quantization bit width is reduced, and the steps 110 to 130 are repeatedly performed until the initial model is quantized to a quantization scale indicated by the target threshold.

For example, it is assumed that an original bit width of the initial model is 32 bits, the initial quantization bit width is 16 bits, and the target threshold is 4 bits. When the initial model is quantized for the first time, the 32-bit initial model is quantized to a 16-bit quantization model according to the 16-bit initial quantization bit width. Then, the 16-bit initial quantization bit width is reduced to an 8-bit target quantization bit width. When the model is quantized for the second time, the 16-bit quantization model is used as a new initial model, and the 8-bit target quantization bit width is used as a new initial quantization bit width. According to the new 8-bit initial quantization bit width, the new 16-bit initial model is quantized to an 8-bit quantization model. Subsequently, the 8-bit initial quantization bit width is reduced to a 5-bit target quantization bit width. When the model is quantized for the third time, the 8-bit quantization model is used as a new initial model, and the 5-bit target quantization bit width is used as a new initial quantization bit width. According to the new 5-bit initial quantization bit width, the new 8-bit initial model is quantized to a 5-bit quantization model. Further, the 5-bit initial quantization bit width is reduced to a 4-bit target quantization bit width. When the model is quantized for the fourth time, the 5-bit quantization model is used as a new initial model, and the 4-bit target quantization bit width is used as a new initial quantization bit width. According to the new 4-bit initial quantization bit width, the new 5-bit initial model is quantized to a 4-bit quantization model. Then, the new 5-bit initial model is used as a teacher model of the 4-bit quantization model, and distillation training is performed on the 4-bit quantization model, and thus the complete-trained quantization model is obtained.

It should be understood that the complete-trained quantization model is used for model inference and deployment. That is, the complete-trained quantization model can be directly used.

It should be noted that through the above steps 110 to 140, the initial model is gradually quantized to a quantization bit width corresponding to the target threshold by using a plurality of quantization operations, and in each quantization process, a model with a previous quantization bit width is used as a teacher model of a current quantization model, and distillation training is performed on the current quantization model, so that it is ensured that the precision of the quantization model can be further improved. In other words, a high-bit model is used to distill a low-bit quantization model to improve the precision of the low-bit quantization model.

In this way, by quantizing an initial model according to an initial quantization bit width, a quantization model is obtained, the initial model is used as a teacher model of the quantization model, and a distillation training is performed on the quantization model to obtain a trained quantization model, and then the initial quantization bit width is reduced to obtain a target quantization bit width; furthermore, the target quantization bit width is used as the initial quantization bit width and the trained quantization model is used as the initial model, and the initial model is continued to be quantized until the target quantization bit width reaches a target threshold, and thus the trained quantization model corresponding to the target quantization bit width that reaches the target threshold is determined as a complete-trained quantization model. A model with a previous quantization bit width can be used as a teacher model of a current quantization model, and distillation training is performed on the current quantization model, so that it is ensured that the precision of the quantization model can be further improved. Moreover, by using the model with the previous quantization bit width as the teacher model of the current quantization model for distillation training, distillation training can be performed by using models with little difference in parameters, thereby further ensuring the stability of the precision of the low-bit quantization model.

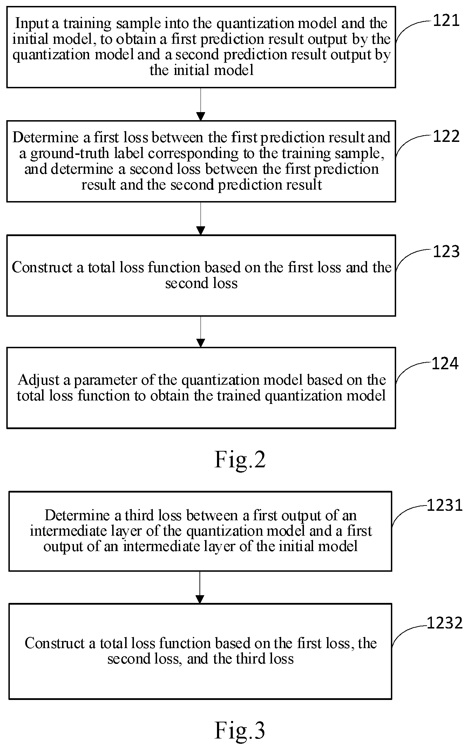

Fig. 2 is a detailed flowchart of step 120 shown in Fig. 1. As shown in Fig. 2, in some implementable embodiments, the step 120 may include the following steps.

In step 121, a training sample is input into the quantization model and the initial model to obtain a first prediction result output by the quantization model and a second prediction result output by the initial model.

Here, the training sample includes one of an image sample, a text sample, and a sound sample. For example, when a model of an image type is trained, the training sample may be an image sample; when a model of an audio type is trained, the training sample may be a sound sample; and when a model of a text type is trained, the training sample may be a text sample.

It should be understood that the training sample may carry a ground-truth label. The ground-truth label may refer to a correct output or category of an instance in the training sample, and may also be referred to as a target variable or a response variable. For example, in the image type, the ground-truth label in the image sample may refer to a category of an item in an image, such as a cat, a dog, or the like. It should be understood that the ground-truth label in the training sample may be manually labeled, or may be labeled by using another automated labeling model.

The electronic device inputs the training sample into the quantization model and the initial model respectively, to obtain the first prediction result output by the quantization model and the second prediction result output by the initial model. The first prediction result is a prediction result obtained by the quantization model based on feature recognition in the training sample, and the second prediction result is a prediction result obtained by the initial model based on feature recognition in the training sample.

In step 122, a first loss between the first prediction result and a ground-truth label corresponding to the training sample is determined, and a second loss between the first prediction result and the second prediction result is determined.

Here, the first loss between the first prediction result and the ground-truth label may be calculated based on a first loss function, and the second loss between the first prediction result and the second prediction result may be calculated based on a second loss function.

It should be noted that the first loss function and the second loss function may be one of L1-Loss (Mean Absolute Error, MAE, an absolute value loss function) and L2-Loss (Mean Squared Error, MSE, a square loss function). Certainly, the first loss function and the second loss function may also be other loss functions, such as a cross entropy loss function (Cross Entropy Loss) and a maximum likelihood loss function (NLL Loss).

It should be understood that the first loss actually refers to a ground-truth loss between an output result of the quantization model and the ground-truth label of the training sample, and the second loss actually refers to a distillation loss between an output of the quantization model and an output of the initial model.

In step 123, a total loss function is constructed based on the first loss and the second loss.

Here, the total loss function includes two parts: the first loss and the second loss. In other words, the total loss function is formed by weighting the first loss and the second loss. The total loss function is determined based on the first loss and a product of the second loss and a first weight parameter.

Exemplarily, the total loss function may be represented by a first computing formula:
${L}_{all} = {L}_{gt} + α ∗ {L}_{dist}$
where *L*ₐₗₗ is the total loss function, *L_{gt}* is the first loss, *L_{dist}* is the second loss, and *α* is the first weight parameter.

It should be noted that the first weight parameter may be a constant obtained based on experience. Certainly, the first weight parameter also is a first adaptive parameter that is related to a gradient of the initial model used in the current training process. A detailed concept of the first adaptive parameter will be described in detail in the following embodiments.

In step 124, a parameter of the quantization model is adjusted based on the total loss function to obtain the trained quantization model.

Here, the corresponding total loss value may be calculated by the total loss function, and the parameter of the quantization model is adjusted based on back propagation of the total loss value, so that the adjusted quantization model can meet a preset training condition, and the trained quantization model is obtained.

It should be noted that in the embodiments of the present disclosure, the quantization model may be continuously trained by using a given set of training samples, so that the total loss value calculated based on the total loss function can reach an optimal solution, that is, the training of the quantization model is completed, where the set of training samples includes a plurality of training samples.

In this way, through the above steps 121 to 124, the quantization model can be distilled and trained based on the initial model, so that the precision of the quantization model can be further improved.

Fig. 3 is a detailed flowchart of step 123 shown in Fig. 2. As shown in Fig. 3, in some implementable embodiments, the step 123 may include the following steps.

In step 1231, a third loss between a first output of an intermediate layer of the quantization model and a second output of an intermediate layer of the initial model is determined.

Here, the intermediate layer of the quantization model and the intermediate layer of the initial model may refer to layers other than output layers in the quantization model and the initial model. For example, the initial model includes a first input layer, a first convolution layer, a second convolution layer, a first pooling layer, and a first output layer that are connected in sequence, and the intermediate layer of the initial model may be the first input layer, the first convolution layer, the second convolution layer, and the first pooling layer.

The third loss refers to a loss between the first output of the intermediate layer of the quantization model and the second output of the intermediate layer corresponding to the initial model. For example, the intermediate layer of the initial model may be the first input layer, the first convolution layer, the second convolution layer, and the first pooling layer, and the intermediate layer of the quantization model is a second input layer, a third convolution layer, a fourth convolution layer, and a second pooling layer, and thus the third loss is a loss between an output of the first input layer and an output of the second input layer.

It should be noted that if the intermediate layer of the quantization model and the intermediate layer of the initial model include a plurality of layers, the third loss may be determined according to third losses corresponding to all the intermediate layers. Exemplarily, an average value of the third losses corresponding to all the intermediate layers may be used to determine the third loss of the intermediate layer. That is, the third losses corresponding to all the intermediate layers may be considered simultaneously.

It should be understood that the third loss between the first output and the second output may be calculated based on a third loss function. The third loss function may be one of L1-Loss and L2-Loss. Certainly, the third loss function may also be another loss function, such as a cross entropy loss function and a maximum likelihood loss function.

In step 1232, the total loss function is constructed based on the first loss, the second loss, and the third loss.

Here, the total loss function may include three parts: the first loss, the second loss, and the third loss. In other words, the total loss function may be formed by weighting the first loss, the second loss, and the third loss. The total loss function may be determined based on the first loss, a product of the second loss and a first weight parameter, and a product of the third loss and a second weight parameter.

Exemplarily, the total loss function may be represented by a second computing formula:
${L}_{all} = {L}_{gt} + α ∗ {L}_{dist} + β ∗ {L}_{feat}$
where *L*ₐₗₗ is the total loss function, *L_{gt}* is the first loss, *L_{dist}* is the second loss, *L_{feat}* is the third loss, *α* is the first weight parameter, and *β* is the second weight parameter.

It should be noted that the second weight parameter may be a constant obtained based on experience. Certainly, the second weight parameter also is a second adaptive parameter that is related to a gradient of the initial model used in the current training process. A detailed concept of the second adaptive parameter will be described in detail in the following embodiments.

In this way, by constructing the total loss function based on the third loss between the intermediate layer of the quantization model and the intermediate layer of the initial model, it can be ensured that features of all the intermediate layers of the quantization model and the initial model can be used for knowledge distillation, which further reduces the difficulty of model distillation and further improves the precision of the quantization model.

In step 1232, the total loss function is constructed based on the first loss, a product of the second loss and a first adaptive parameter, and a product of the third loss and a second adaptive parameter.

Here, the first adaptive parameter and the second adaptive parameter are related to the gradient of the initial model, and the first adaptive parameter is configured to dynamically adjust an amplitude of the second loss, and the second adaptive parameter is configured to dynamically adjust an amplitude of the third loss.

It should be noted that in each training process, since the gradient of the initial model is different, values of the first adaptive parameter and the second adaptive parameter are also different. In other words, the magnitudes of the first adaptive parameter and the second adaptive parameter are related to the gradient of the initial model in the current training process.

During the training process of the model, after forward propagation, a parameter of the model needs to be adjusted by using a prediction result of the model, that is, back propagation. During the back propagation process, a loss value may be allocated by using a weight of each link of the model. The gradient refers to a direction in which the total loss function drops fastest. During the update process of the model, generally, the updated model is obtained by finding the direction in which the total loss function drops fastest is found, multiplying it by a set learning step, and adding the learning step to the old model or subtracting the learning step from the old model.

It should be understood that the gradient is actually a vector representing a direction, and has the same shape as the total loss function. An element at each position in the gradient represents a change rate of the element at the corresponding position in the total loss function relative to the weight. Therefore, the magnitude of the gradient actually indicates the model iteration speed. A larger the gradient, the faster the model iteration speed, but the model is also prone to oscillations during the learning process.

In some embodiments, the gradient of each layer in the model may be calculated by using a chain rule.

It should be noted that the first adaptive parameter is actually used to adjust the second loss corresponding to the initial model based on the gradient of the initial model. During the training process, when the impact of the second loss on the gradient of the weight of the quantization model is small, the first adaptive parameter increases the impact of the second loss on the quantization model. When the impact of the second loss on the gradient of the weight of the quantization model is large, the first adaptive parameter reduces the impact of the second loss on the quantization model. By using the first adaptive parameter, the impact of the second loss (distillation loss) on the amplitude of the gradient of the quantization model can be dynamically adjusted. Similarly, the second adaptive parameter is actually used to adjust the third loss corresponding to the initial model based on the gradient of the initial model.

In this way, by using the first adaptive parameter and the second adaptive parameter, the impact of the second loss and the third loss on the total loss function can be dynamically adjusted, so that the impact of the second loss and the third loss on the gradient of the parameter weight of the quantization model is dynamically adjusted, and the training of the quantization model can maintain stability and consistency, thereby maximizing the precision of the quantization model. It should be understood that the first adaptive parameter and the second adaptive parameter can balance the second loss and the third loss, so that the contributions of the second loss and the third loss to the model training are consistent.

The first adaptive parameter and the second adaptive parameter are determined by the following steps:
determining the first adaptive parameter and the second adaptive parameter based on a first gradient value of the quantization model and a second gradient value of the initial model.

Here, the first gradient value and the second gradient value may refer to gradient values corresponding to respective layers in the quantization model and the initial model. The gradient refers to a vector composed by partial derivatives of a function with respect to each parameter. Therefore, the first gradient value of the quantization model and the second gradient value of the initial model may both be calculated by using a chain rule. The chain rule refers to a composite function formed by combining two functions, and the derivative is equal to a derivative of an inner function substituted into a value of an outer function, multiplied by a derivative of the inner function.

It should be noted that the first adaptive parameter and the second adaptive parameter may be related to the first gradient value of the quantization model and the second gradient value of the initial model. In other words, the first adaptive parameter and the second adaptive parameter may be calculated based on the first gradient value of the quantization model relative to the second gradient value of the initial model. Exemplarily, the first adaptive parameter and the second adaptive parameter may be calculated based on a ratio of the first gradient value to the second gradient value.

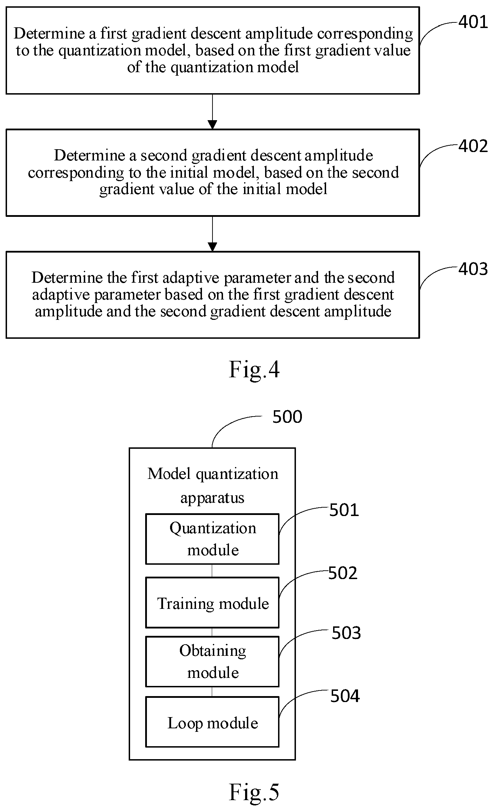

Fig. 4 is a flowchart of determining a first adaptive parameter and a second adaptive parameter according to some embodiments. As shown in Fig. 4, the first adaptive parameter and the second adaptive parameter are determined by the following steps.

In step 401, a first gradient descent amplitude corresponding to the quantization model is determined based on the first gradient value of the quantization model.

Here, the first gradient descent amplitude is used to indicate the speed of gradient descent of each layer in the quantization model. The larger the first gradient descent amplitude, the greater the gradient change of the weight parameters brought to the quantization model by the first loss. The smaller the first gradient descent amplitude, the smaller the gradient change of the weight parameters brought to the quantization model by the first loss.

The first gradient value includes a first maximum gradient value and a first minimum gradient value of the quantization model.

For example, gradients of respective layers in the quantization model are 0.2, 0.4, 0.6, and 0.8 respectively, and thus 0.8 is the first maximum gradient value of the quantization model, and 0.2 is the first minimum gradient value of the quantization model.

The first gradient descent amplitude is determined based on a first difference between the first maximum gradient value and the first minimum gradient value.

Exemplarily, the first gradient descent amplitude may be calculated based on a third computing formula, where the third computing formula is:
${H}_{gt} = max \left({grad}_{gt}\right) - min \left({grad}_{gt}\right)$
where *H_{gt}* is the first gradient descent amplitude, *max*(*grad_{gt}*) is the first maximum gradient value, and min (*grad_{gt}*) is the first minimum gradient value.

In step 402, a second gradient descent amplitude corresponding to the initial model is determined based on the second gradient value of the initial model.

Here, the second gradient descent amplitude is used to indicate the speed of gradient descent of each layer in the initial model. The larger the second gradient descent amplitude, the greater the gradient change of the weight parameter brought to the quantization model by the second loss. The smaller the second gradient descent amplitude, the smaller the gradient change of the weight parameter brought to the quantization model by the second loss.

Exemplarily, the second gradient value may include a second maximum gradient value and a second minimum gradient value of the initial model.

For example, gradients of respective layers in the initial model are 0.3, 0.6, 0.9, and 1.2 respectively, and thus 1.2 is the second maximum gradient value of the initial model, and 0.3 is the second minimum gradient value of the initial model.

The second gradient descent amplitude is determined based on a second difference between the second maximum gradient value and the second minimum gradient value.

Exemplarily, the second gradient descent amplitude may be calculated based on a fourth computing formula, where the fourth computing formula is:
${H}_{dist} = max \left({grad}_{dist}\right) - min \left({grad}_{dist}\right)$
where *H_{dist}* is the second gradient descent amplitude, *max*(*grad_{dist}*) is the second maximum gradient value, and min (*grad_{dist}*) i is the second minimum gradient value.

In step 403, the first adaptive parameter and the second adaptive parameter are determined based on the first gradient descent amplitude and the second gradient descent amplitude.

Here, after the first gradient descent amplitude and the second gradient descent amplitude are calculated, the first adaptive parameter and the second adaptive parameter are determined based on a ratio of the first gradient descent amplitude to the second gradient descent amplitude.

Exemplarily, the first adaptive parameter and the second adaptive parameter may be calculated based on a fifth computing formula, where the fifth computing formula is:
$f \left(grad\right) = \frac{max \left({grad}_{gt}\right) - min \left({grad}_{gt}\right)}{max \left({grad}_{dist}\right) - min \left({grad}_{dist}\right)}$
where *f*(*grad*) is the first adaptive parameter or the second adaptive parameter.

It should be noted that, as shown in the above fifth computing formula, when the impact of the second loss or the third loss on the gradient of the weight of the quantization model becomes small (equivalent to *H_{dist}* becoming small), the first adaptive parameter or the second adaptive parameter increases, and the weight of the second loss or the third loss in the total loss function increases. When the impact of the second loss or the third loss on the gradient of the weight of the quantization model becomes large (equivalent to *H_{dist}* becoming large), the first adaptive parameter or the second adaptive parameter decreases, and the weight of the second loss or the third loss in the total loss function decreases. Therefore, the stability and consistency of the training of the quantization model can be maintained by using the first adaptive parameter or the second adaptive parameter.

Generally speaking, in the distillation process, the second loss and the third loss drop faster than the first loss. Therefore, the second loss and the third loss almost have no effect in the middle and later stages of the training of the quantization model. However, the second loss and the third loss can be dynamically adjusted by using the first adaptive parameter and the second adaptive parameter, to maintain the stability and consistency of the training of the quantization model.

In this way, through the above embodiments, it can be ensured that the second loss and the third loss can play the same role in each iteration process of the quantization model, so that the stability and consistency of the training of the quantization model are ensured, and the effect of distillation training is greatly improved.

Fig. 5 is a schematic diagram of a structure of a model quantization apparatus according to some embodiments. As shown in Fig. 4, an embodiment of the present disclosure provides a model quantization apparatus 500. The model quantization apparatus 500 may include:
a quantization module 501 configured to quantize an initial model according to an initial quantization bit width to obtain a quantization model, wherein the initial model is one of an image-type model, a text-type model, and an audio-type model;
a training module 502 configured to use the initial model as a teacher model of the quantization model, and perform distillation training on the quantization model to obtain a trained quantization model;
an obtaining module 503 configured to reduce the initial quantization bit width to obtain a target quantization bit width; and
a loop module 504 configured to use the target quantization bit width as the initial quantization bit width and use the trained quantization model as the initial model, and return to the quantization module until the target quantization bit width reaches a target threshold, and determine the trained quantization model corresponding to the target quantization bit width that reaches the target threshold as a complete-trained quantization model.

Optionally, the training module 502 includes:
an input unit configured to input a training sample into the quantization model and the initial model to obtain a first prediction result output by the quantization model and a second prediction result output by the initial model;
a loss determination unit configured to determine a first loss between the first prediction result and a ground-truth label corresponding to the training sample, and determine a second loss between the first prediction result and the second prediction result;
a construction unit configured to construct a total loss function based on the first loss and the second loss; and
an adjustment unit configured to adjust a parameter of the quantization model based on the total loss function to obtain the trained quantization model.

Optionally, the construction unit is specifically configured to:
determine a third loss between a first output of an intermediate layer of the quantization model and a second output of an intermediate layer of the initial model; and
construct the total loss function based on the first loss, the second loss, and the third loss.

Optionally, the construction unit is specifically configured to:
construct the total loss function based on the first loss, a product of the second loss and a first adaptive parameter, and a product of the third loss and a second adaptive parameter;
where the first adaptive parameter and the second adaptive parameter are related to a gradient of the initial model, the first adaptive parameter is configured to dynamically adjust an amplitude of the second loss, and the second adaptive parameter is configured to dynamically adjust an amplitude of the third loss.

Optionally, the construction unit is specifically configured to:
determine the first adaptive parameter and the second adaptive parameter based on a first gradient value of the quantization model and a second gradient value of the initial model.

Optionally, the construction unit is specifically configured to:
determine a first gradient descent amplitude corresponding to the quantization model based on the first gradient value of the quantization model;
determine a second gradient descent amplitude corresponding to the initial model based on the second gradient value of the initial model; and
determine the first adaptive parameter and the second adaptive parameter based on the first gradient descent amplitude and the second gradient descent amplitude.

Optionally, the construction unit is specifically configured to:
determine the first adaptive parameter and the second adaptive parameter based on a ratio of the first gradient descent amplitude to the second gradient descent amplitude.

The function logic performed by each functional module in the above model quantization apparatus 500 has been described in detail in the part related to the method, and is not repeated here.

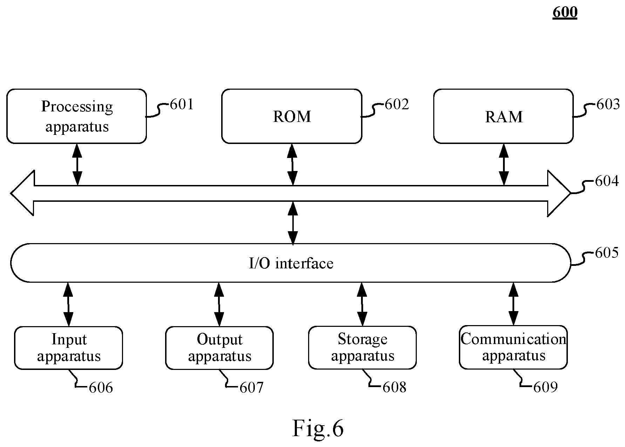

Referring to Fig. 6 below, Fig. 6 shows a schematic diagram of a structure of an electronic device (for example, a terminal device or a server) 600 suitable for implementing the embodiments of the present disclosure. The terminal device in the embodiments of the present disclosure may include, but is not limited to, mobile terminals such as mobile phones, notebook computers, digital broadcast receivers, PDAs (personal digital assistants), PADs (tablet computers), PMPs (portable multimedia players), and vehicle-mounted terminals (such as vehicle navigation terminals) or the like, and fixed terminals such as digital TVs, desktop computers or the like. The electronic device shown in Fig. 6 is only an example, and should not impose any limitation on the function and scope of use of the embodiments of the present disclosure.

As shown in Fig. 6, the electronic device 600 may include a processing apparatus (such as a central processor, a graphics processor, etc.) 601 that may perform various suitable actions and processing in accordance with a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are interconnected to each other through a bus 604. An input/output (I/O) interface 605 is also connected to the bus 604.

Usually, the following apparatuses may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (LCD), a loudspeaker, a vibrator, etc.; the storage apparatus 608 including, for example, a magnetic tape, a hard disk, etc.; and a communication apparatus 609. The communication apparatus 609 may allow the electronic device 600 to be in wireless or wired communication with other devices to exchange data. Although Fig. 6 shows the electronic device 600 having various apparatuses, it should be understood that not all of the illustrated apparatuses are necessarily implemented or included. More or fewer apparatuses may be implemented or included alternatively.

In particular, according to an embodiment of the present disclosure, the process described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 608, or may be installed from the ROM 602. When the computer program is executed by the processing apparatus 601, the above-mentioned functions defined in the methods of the embodiments of the present disclosure are performed.

It should be noted that the above computer-readable medium described in the present disclosure may be a computer-readable signal medium, a computer-readable storage medium, or any combination thereof. For example, the computer-readable storage medium may be, but not limited to, electric, magnetic, optical, electromagnetic, infrared, or semiconductor systems, apparatuses, or devices, or any combination thereof. More specific examples of the computer-readable storage medium may include, but is not limited to: an electrical connection with one or more wires, a portable computer disk, a hard disk, a random access memory (RAM), a read-only memory (ROM), an erasable programmable read-only memory (EPROM or flash memory), an optic fiber, a compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program codes. The data signal propagating in such a manner may take a plurality of forms, including but not limited to an electromagnetic signal, an optical signal, or any suitable combination thereof. The computer-readable signal medium may also be any other computer-readable medium than the computer-readable storage medium. The computer-readable signal medium may send, propagate, or transmit a program used by or in combination with an instruction execution system, apparatus, or device. The program code contained in the computer-readable medium may be transmitted by any suitable medium, including but not limited to: electric wires, fiber-optic cables, radio frequency (RF), etc., or any suitable combination thereof.

In some implementations, the electronic device may communicate using any currently known or future-developed network protocol such as HyperText Transfer Protocol (HTTP), and may be interconnected to digital data communication (for example, a communication network) in any form or medium. Examples of the communication network include a local area network ("LAN"), a wide area network ("WAN"), an internetwork (for example, the Internet), and an end-to-end network (for example, an ad hoc end-to-end network), as well as any currently known or future-developed network.

The above computer-readable medium may be included in the above electronic device; or may also exist alone, without being assembled into the electronic device.

The above computer-readable medium carries one or more programs that, when executed by the electronic device, cause the electronic device to: quantize an initial model according to an initial quantization bit width to obtain a quantization model, wherein the initial model is one of an image-type model, a text-type model, and an audio-type model; use the initial model as a teacher model of the quantization model, and perform distillation training on the quantization model to obtain a trained quantization model; reduce the initial quantization bit width to obtain a target quantization bit width; use the target quantization bit width as the initial quantization bit width and use the trained quantization model as the initial model, and return to perform the step of quantizing an initial model according to an initial quantization bit width to obtain a quantization model, until the target quantization bit width reaches a target threshold, and determine the trained quantization model corresponding to the target quantization bit width that reaches the target threshold as a complete-trained quantization model.

The computer program code for performing the operations in the present disclosure may be written in one or more programming languages or a combination thereof. The above-mentioned programming languages include but are not limited to an object-oriented programming language, such as Java, Smalltalk, and C++, and further include conventional procedural programming languages, such as "C" programming language or similar programming languages. The program code may be executed entirely on a computer of a user, partially executed on a computer of a user, executed as an stand-alone software package, partially executed on a computer of a user and partially executed on a remote computer, or executed entirely on the remote computer or server. In the scenario related to a remote computer, the remote computer may be connected to the computer of the user through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of the systems, methods, and computer program products according to various embodiments of the present disclosure. In this regard, each block in the flowchart or block diagram may represent a module, a program segment, or a part of codes, including one or more executable instructions for implementing specified logical functions. It should also be noted that, in some alternative implementations, the functions noted in the blocks may also occur out of the order noted in the accompanying drawings. For example, two blocks shown in succession can actually be executed substantially concurrently, or they can sometimes be executed in the reverse order, depending on the functionality involved. It should also be noted that each block in the block diagram and/or the flowchart, and a combination of the blocks in the block diagram and/or the flowchart may be implemented by a dedicated hardware-based system that performs the specified functions or operations, or may be implemented by a combination of dedicated hardware and computer instructions.

The modules involved in the embodiments of the present disclosure may be implemented in software, or may be implemented in hardware. The name of a module does not constitute a limitation on the module itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include but is not limited to electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above descriptions are merely description of preferred embodiments of the present disclosure and explanations of the applied technical principles. It will be appreciated by those skilled in the art that the scope of disclosure involved in the present disclosure is not limited to the technical solutions formed by the specific combination of the above technical features, but is only limited by the scope of the appended claims.

In addition, although operations have been described in a particular order, it should be understood as requiring that such operations are performed in the specific order as shown or in sequence order. Under certain circumstances, multitasking and parallel processing may be advantageous. Similarly, although several specific implementation details are included in the foregoing discussions, these details should not be construed as limitation to the invention, the scope of which is defined by the appended claims. Some features described in the context of separate embodiments can also be combined in a single embodiment. Rather, various features described in the context of a single embodiment may also be implemented separately or in any appropriate subcombination in a plurality of embodiments. The above are limited by the scope of the appended claims.

Although the present subject matter has been described in a language specific to structural features and/or logical method acts, it should be understood that the subject matter defined in the appended claims is not necessarily limited to the particular features or actions described above. In contrast, the particular features and acts described above are merely exemplary forms for implementing the claims. For the apparatus in the above embodiments, the particular manner in which each module performs an operation has been described in detail in the embodiments related to the method, and will not be described in detail here.

## Claims

1. A computer-implemented model quantization method, **characterized in** comprising:
quantizing (110) an initial model according to an initial quantization bit width to obtain a quantized model, wherein the initial model is one of an image-type model, a text-type model, and an audio-type model, wherein the image-type model is trained using image samples, wherein the text-type model is trained using text samples, and wherein the audio-type model is trained using audio samples;
using (120) the initial model as a teacher model of the quantized model, and performing distillation training on the quantized model to obtain a trained quantized model;
reducing (130) the initial quantization bit width to obtain a first quantization bit width; and
using (140) the first quantization bit width as the initial quantization bit width and using the trained quantized model as the initial model, and returning to perform the quantizing the initial model according to the initial quantization bit width to obtain the quantized model, until the first quantization bit width reaches a first threshold, and determining the trained quantized model corresponding to the first quantization bit width that reaches the first threshold as a complete-trained quantized model,
wherein the using (120) the initial model as the teacher model of the quantized model, and performing distillation training on the quantized model to obtain the trained quantized model comprises:
inputting (121) a training sample into the quantized model and the initial model, to obtain a first prediction result output by the quantized model and a second prediction result output by the initial model;
determining (122) a first loss between the first prediction result and a ground-truth label corresponding to the training sample, and determining a second loss between the first prediction result and the second prediction result;
determining (1231) a third loss between a first output of an intermediate layer of the quantized model and a second output of an intermediate layer of the initial model;
constructing (123, 1232) a total loss function based on the first loss, a product of the second loss and a first adaptive parameter, and a product of the third loss and a second adaptive parameter, wherein the first adaptive parameter and the second adaptive parameter are related to a gradient of the initial model, and the first adaptive parameter is configured to dynamically adjust an amplitude of the second loss, and the second adaptive parameter is configured to dynamically adjust an amplitude of the third loss; and
adjusting (124) a parameter of the quantized model based on the total loss function, to obtain the trained quantized model,
wherein the first adaptive parameter and the second adaptive parameter are determined by the following steps:
determining (401) a first gradient descent amplitude corresponding to the quantized model, based on a difference value between a first maximum gradient value and a first minimum gradient value of a first gradient value of the quantized model;
determining (402) a second gradient descent amplitude corresponding to the initial model, based on a difference value between a second maximum gradient value and a second minimum gradient value of a second gradient value of the initial model; and
determining (403) the first adaptive parameter and the second adaptive parameter based on a ratio of the first gradient descent amplitude to the second gradient descent amplitude.

2. A computer-readable storage medium having a computer program stored thereon, **characterized in that** the computer program comprises instructions which, when the computer program is executed by a processing apparatus (601), cause the processing apparatus (601) to implement the method according to claim 1.

3. An electronic device (600), comprising:
a storage apparatus (608) having a computer program stored thereon; and
a processing apparatus (601) configured to execute the computer program in the storage apparatus (608), wherein the computer program comprises instructions which, when the program is executed by the processing apparatus (601), cause the processing apparatus (601) to implement a method comprising:
quantizing (110) an initial model according to an initial quantization bit width to obtain a quantized model, wherein the initial model is one of an image-type model, a text-type model, and an audio-type model, wherein the image-type model is trained using image samples, wherein the text-type model is trained using text samples, and wherein the audio-type model is trained using audio samples;
using (120) the initial model as a teacher model of the quantized model, and performing distillation training on the quantized model to obtain a trained quantized model;
reducing (130) the initial quantization bit width to obtain a first quantization bit width; and
using (140) the first quantization bit width as the initial quantization bit width and using the trained quantized model as the initial model, and returning to perform the quantizing the initial model according to the initial quantization bit width to obtain the quantized model, until the first quantization bit width reaches a first threshold, and determining the trained quantized model corresponding to the first quantization bit width that reaches the first threshold as a complete-trained quantized model,
wherein the using (120) the initial model as the teacher model of the quantized model, and performing distillation training on the quantized model to obtain the trained quantized model comprises:
inputting (121) a training sample into the quantized model and the initial model, to obtain a first prediction result output by the quantized model and a second prediction result output by the initial model;
determining (122) a first loss between the first prediction result and a ground-truth label corresponding to the training sample, and determining a second loss between the first prediction result and the second prediction result;
determining (1231) a third loss between a first output of an intermediate layer of the quantization model and a second output of an intermediate layer of the initial model;
constructing (123, 1232) a total loss function based on the first loss, a product of the second loss and a first adaptive parameter, and a product of the third loss and a second adaptive parameter, wherein the first adaptive parameter and the second adaptive parameter are related to a gradient of the initial model, and the first adaptive parameter is configured to dynamically adjust an amplitude of the second loss, and the second adaptive parameter is configured to dynamically adjust an amplitude of the third loss; and
adjusting (124) a parameter of the quantized model based on the total loss function, to obtain the trained quantized model,
wherein the first adaptive parameter and the second adaptive parameter are determined by the following steps:
determining (401) a first gradient descent amplitude corresponding to the quantized model, based on a difference value between a first maximum gradient value and a first minimum gradient value of a first gradient value of the quantized model;
determining (402) a second gradient descent amplitude corresponding to the initial model, based on a difference value between a second maximum gradient value and a second minimum gradient value of a second gradient value of the initial model; and
determining (403) the first adaptive parameter and the second adaptive parameter based on a ratio of the first gradient descent amplitude to the second gradient descent amplitude.

## Patentansprüche

1. Computerimplementiertes Modellquantisierungsverfahren, **dadurch gekennzeichnet, dass** es umfasst:
Quantisieren (110) eines Ausgangsmodells gemäß einer anfänglichen Quantisierungsbitbreite, um ein quantisiertes Modell zu erhalten, wobei das Ausgangsmodell eines von einem Bildtypmodell, einem Texttypmodell und einem Audiotypmodell ist; wobei das Bildtypmodell unter Verwendung von Bildproben trainiert wird, das Texttypmodell unter Verwendung von Textproben trainiert wird und das Audiotypmodell unter Verwendung von Audioproben trainiert wird;
Verwenden (120) des Ausgangsmodells als ein Lehrermodell des quantisierten Modells und Durchführen eines Destillationstrainings am quantisierten Modell, um ein trainiertes quantisiertes Modell zu erhalten;
Verringern (130) der anfänglichen Quantisierungsbitbreite, um eine erste Quantisierungsbitbreite zu erhalten; und
Verwenden (140) der ersten Quantisierungsbitbreite als die anfängliche Quantisierungsbitbreite und Verwenden des trainierten quantisierten Modells als das Ausgangsmodell und erneutes Durchführen des Quantisierens des Ausgangsmodells entsprechend der anfänglichen Quantisierungsbitbreite, um das quantisierte Modell zu erhalten, bis die erste Quantisierungsbitbreite einen ersten Schwellenwert erreicht, und Bestimmen des trainierten quantisierten Modells, das der ersten Quantisierungsbitbreite entspricht, die den ersten Schwellenwert erreicht, als ein vollständig trainiertes quantisiertes Modell,
wobei das Verwenden (120) des Ausgangsmodells als Trainingslehrermodell des quantisierten Modells und das Durchführen eines Destillationstrainings am quantisierten Modell, um das trainierte quantisierte Modell zu erhalten, umfasst:
Eingeben (121) einer Trainingsprobe in das quantisierte Modell und das Ausgangsmodell, um ein erstes Vorhersageergebnis, das durch das quantisierte Modell ausgegeben wird, und ein zweites Vorhersageergebnis, das durch das Ausgangsmodell ausgegeben wird, zu erhalten;
Bestimmen (122) eines ersten Verlusts zwischen dem ersten Vorhersageergebnis und einer Referenzwahrheitskennzeichnung, die der Trainingsprobe entspricht, und Bestimmen eines zweiten Verlusts zwischen dem ersten Vorhersageergebnis und dem zweiten Vorhersageergebnis;
Bestimmen (1231) eines dritten Verlusts zwischen einer ersten Ausgabe einer Zwischenschicht des quantisierten Modells und einer zweiten Ausgabe einer Zwischenschicht des Ausgangsmodells;
Erstellen (123, 1232) einer Gesamtverlustfunktion auf Grundlage des ersten Verlusts, eines Produkts des zweiten Verlusts und eines ersten adaptiven Parameters und eines Produkts des dritten Verlusts und eines zweiten adaptiven Parameters, wobei der erste adaptive Parameter und der zweite adaptive Parameter mit einem Gradienten des Ausgangsmodells zusammenhängen und der erste adaptive Parameter dafür konfiguriert ist, eine Amplitude des zweiten Verlusts dynamisch anzupassen, und der zweite adaptive Parameter dafür konfiguriert ist, eine Amplitude des dritten Verlusts dynamisch anzupassen; und
Anpassen (124) eines Parameters des quantisierten Modells auf Grundlage der Gesamtverlustfunktion anpassen, um das trainierte quantisierte Modell zu erhalten,
wobei der erste adaptive Parameter und der zweite adaptive Parameter durch die folgenden Schritte bestimmt werden:
Bestimmen (401) einer ersten Gradientenabstiegsamplitude, die dem quantisierten Modell entspricht, auf Grundlage eines Differenzwerts zwischen einem ersten maximalen Gradientenwert und einem ersten minimalen Gradientenwert eines ersten Gradientenwerts des quantisierten Modells;
Bestimmen (402) einer zweiten Gradientenabstiegsamplitude, die dem Ausgangsmodell entspricht, auf Grundlage eines Differenzwerts zwischen einem zweiten maximalen Gradientenwert und einem zweiten minimalen Gradientenwert des zweiten Gradientenwerts des Ausgangsmodells; und
Bestimmen (403) des ersten adaptiven Parameters und des zweiten adaptiven Parameters auf Grundlage eines Verhältnisses der ersten Gradientenabstiegsamplitude zur zweiten Gradientenabstiegsamplitude.

2. Computerlesbares Speichermedium, das ein darauf gespeichertes Computerprogramm aufweist, **dadurch gekennzeichnet, dass** das Computerprogramm Anweisungen umfasst, die, wenn das Computerprogramm von einer Verarbeitungseinrichtung (601) ausgeführt wird, die Verarbeitungseinrichtung (601) veranlassen, das Verfahren nach Anspruch 1 zu implementieren.

3. Elektronische Vorrichtung (600), umfassend:
eine Speichereinrichtung (608), die ein darauf gespeichertes Computerprogramm aufweist; und
eine Verarbeitungseinrichtung (601), die dafür konfiguriert ist, das Computerprogramm in der Speichereinrichtung (608) ausführt, wobei das Computerprogramm Anweisungen umfasst, die, wenn das Programm von der Verarbeitungseinrichtung (601) ausgeführt wird, die Verarbeitungseinrichtung (601) veranlassen, ein Verfahren implementieren, das umfasst:
Quantisieren (110) eines Ausgangsmodells gemäß einer anfänglichen Quantisierungsbitbreite, um ein quantisiertes Modell zu erhalten, wobei das Ausgangsmodell eines von einem Bildtypmodell, einem Texttypmodell und einem Audiotypmodell ist; wobei das Bildtypmodell unter Verwendung von Bildproben trainiert wird, das Texttypmodell unter Verwendung von Textproben trainiert wird und das Audiotypmodell unter Verwendung von Audioproben trainiert wird;
Verwenden (120) des Ausgangsmodells als ein Lehrermodell des quantisierten Modells und Durchführen eines Destillationstrainings am quantisierten Modell, um ein trainiertes quantisiertes Modell zu erhalten;
Verringern (130) der anfänglichen Quantisierungsbitbreite, um eine erste Quantisierungsbitbreite zu erhalten; und
Verwenden (140) der ersten Quantisierungsbitbreite als die anfängliche Quantisierungsbitbreite und Verwenden des trainierten quantisierten Modells als das Ausgangsmodell und erneutes Durchführen des Quantisierens des Ausgangsmodells entsprechend der anfänglichen Quantisierungsbitbreite, um das quantisierte Modell zu erhalten, bis die erste Quantisierungsbitbreite einen ersten Schwellenwert erreicht, und Bestimmen des trainierten quantisierten Modells, das der ersten Quantisierungsbitbreite entspricht, die den ersten Schwellenwert erreicht, als ein vollständig trainiertes quantisiertes Modell,
wobei das Verwenden (120) des Ausgangsmodells als Trainingslehrermodell des quantisierten Modells und das Durchführen eines Destillationstrainings am quantisierten Modell, um das trainierte quantisierte Modell zu erhalten, umfasst:
Eingeben (121) einer Trainingsprobe in das quantisierte Modell und das Ausgangsmodell, um ein erstes Vorhersageergebnis, das durch das quantisierte Modell ausgegeben wird, und ein zweites Vorhersageergebnis, das durch das Ausgangsmodell ausgegeben wird, zu erhalten;
Bestimmen (122) eines ersten Verlusts zwischen dem ersten Vorhersageergebnis und einer Referenzwahrheitskennzeichnung, die der Trainingsprobe entspricht, und Bestimmen eines zweiten Verlusts zwischen dem ersten Vorhersageergebnis und dem zweiten Vorhersageergebnis;
Bestimmen (1231) eines dritten Verlusts zwischen einer ersten Ausgabe einer Zwischenschicht des Quantisierungsmodells und einer zweiten Ausgabe einer Zwischenschicht des Ausgangsmodells;
Erstellen (123, 1232) einer Gesamtverlustfunktion auf Grundlage des ersten Verlusts, eines Produkts des zweiten Verlusts und eines ersten adaptiven Parameters und eines Produkts des dritten Verlusts und eines zweiten adaptiven Parameters, wobei der erste adaptive Parameter und der zweite adaptive Parameter mit einem Gradienten des Ausgangsmodells zusammenhängen und der erste adaptive Parameter dafür konfiguriert ist, eine Amplitude des zweiten Verlusts dynamisch anzupassen, und der zweite adaptive Parameter dafür konfiguriert ist, eine Amplitude des dritten Verlusts dynamisch anzupassen; und
Anpassen (124) eines Parameters des quantisierten Modells auf Grundlage der Gesamtverlustfunktion anpassen, um das trainierte quantisierte Modell zu erhalten,
wobei der erste adaptive Parameter und der zweite adaptive Parameter durch die folgenden Schritte bestimmt werden:
Bestimmen (401) einer ersten Gradientenabstiegsamplitude, die dem quantisierten Modell entspricht, auf Grundlage eines Differenzwerts zwischen einem ersten maximalen Gradientenwert und einem ersten minimalen Gradientenwert eines ersten Gradientenwerts des quantisierten Modells;
Bestimmen (402) einer zweiten Gradientenabstiegsamplitude, die dem Ausgangsmodell entspricht, auf Grundlage eines Differenzwerts zwischen einem zweiten maximalen Gradientenwert und einem zweiten minimalen Gradientenwert des zweiten Gradientenwerts des Ausgangsmodells; und
Bestimmen (403) des ersten adaptiven Parameters und des zweiten adaptiven Parameters auf Grundlage eines Verhältnisses der ersten Gradientenabstiegsamplitude zur zweiten Gradientenabstiegsamplitude.

## Revendications

1. Procédé de quantification de modèle mis en œuvre par ordinateur, **caractérisé en ce qu'**il comprend :
la quantification (110) d'un modèle initial selon une largeur de bit de quantification initiale pour obtenir un modèle quantifié, dans lequel le modèle initial est l'un d'un modèle de type image, d'un modèle de type texte et d'un modèle de type audio, dans lequel le modèle de type image est entraîné à l'aide d'échantillons d'images, dans lequel le modèle de type texte est entraîné à l'aide d'échantillons de texte et dans lequel le modèle de type audio est entraîné à l'aide d'échantillons audio ;
l'utilisation (120) du modèle initial comme modèle enseignant du modèle quantifié et la réalisation d'un entraînement par distillation sur le modèle quantifié pour obtenir un modèle quantifié entraîné ;
la réduction (130) de la largeur de bit de quantification initiale pour obtenir une première largeur de bit de quantification ; et
l'utilisation (140) de la première largeur de bit de quantification comme largeur de bit de quantification initiale et l'utilisation du modèle quantifié entraîné comme modèle initial, et le retour à la réalisation de la quantification du modèle initial selon la largeur de bit de quantification initiale pour obtenir le modèle quantifié, jusqu'à ce que la première largeur de bit de quantification atteigne un premier seuil et la détermination du modèle quantifié entraîné correspondant à la première largeur de bit de quantification qui atteint le premier seuil comme modèle quantifié entièrement entraîné,
dans lequel l'utilisation (120) du modèle initial comme modèle enseignant du modèle quantifié, et la réalisation d'un entraînement par distillation sur le modèle quantifié pour obtenir le modèle quantifié entraîné, comprend :
l'entrée (121) d'un échantillon d'entraînement dans le modèle quantifié et le modèle initial, pour obtenir un premier résultat de prédiction délivré par le modèle quantifié et un second résultat de prédiction délivré par le modèle initial ;
la détermination (122) d'une première perte entre le premier résultat de prédiction et une étiquette de vérité terrain correspondant à l'échantillon d'entraînement, et la détermination d'une deuxième perte entre le premier résultat de prédiction et le second résultat de prédiction ;
la détermination (1231) d'une troisième perte entre une première sortie d'une couche intermédiaire de modèle quantifié et une seconde sortie d'une couche intermédiaire du modèle initial ;
la construction (123, 1232) d'une fonction de perte totale sur la base de la première perte, d'un produit de la deuxième perte et d'un premier paramètre adaptatif, et d'un produit de la troisième perte et d'un second paramètre adaptatif, dans lequel le premier paramètre adaptatif et le second paramètre adaptatif sont liés à un gradient du modèle initial, et le premier paramètre adaptatif est configuré pour ajuster de manière dynamique l'amplitude de la deuxième perte, et le second paramètre adaptatif est configuré pour ajuster de manière dynamique l'amplitude de la troisième perte ; et
l'ajustement (124) d'un paramètre du modèle quantifié sur la base de la fonction de perte totale, pour obtenir le modèle quantifié entraîné,
dans lequel le premier paramètre adaptatif et le second paramètre adaptatif sont déterminés par les étapes suivantes :
la détermination (401) d'une première amplitude de descente de gradient correspondant au modèle quantifié, sur la base d'une valeur de différence entre une première valeur de gradient maximale et une première valeur de gradient minimale d'une première valeur de gradient du modèle quantifié ;
la détermination (402) d'une seconde amplitude de descente de gradient correspondant au modèle initial, sur la base d'une valeur de différence entre une seconde valeur de gradient maximale et une seconde valeur de gradient minimale d'une seconde valeur de gradient du modèle initial ; et
la détermination (403) du premier paramètre adaptatif et du second paramètre adaptatif sur la base d'un rapport entre la première amplitude de descente de gradient et la seconde amplitude de descente de gradient.

2. Support de stockage lisible par ordinateur sur lequel est stocké un programme d'ordinateur, **caractérisé en ce que** le programme d'ordinateur comprend des instructions qui, lorsque le programme d'ordinateur est exécuté par un appareil de traitement (601), amènent l'appareil de traitement (601) à mettre en œuvre le procédé selon la revendication 1.

3. Dispositif électronique (600), comprenant
un appareil de stockage (608) sur lequel est stocké un programme d'ordinateur ; et
un appareil de traitement (601) configuré pour exécuter le programme d'ordinateur dans l'appareil de stockage (608), dans lequel le programme d'ordinateur comprend des instructions qui, lorsque le programme est exécuté par l'appareil de traitement (601), amènent l'appareil de traitement (601) à mettre en œuvre un procédé comprenant :
la quantification (110) d'un modèle initial selon une largeur de bit de quantification initiale pour obtenir un modèle quantifié, dans lequel le modèle initial est l'un d'un modèle de type image, d'un modèle de type texte et d'un modèle de type audio, dans lequel le modèle de type image est entraîné à l'aide d'échantillons d'images, dans lequel le modèle de type texte est entraîné à l'aide d'échantillons de texte et dans lequel le modèle de type audio est entraîné à l'aide d'échantillons audio ;
l'utilisation (120) du modèle initial comme modèle enseignant du modèle quantifié et la réalisation d'un entraînement par distillation sur le modèle quantifié pour obtenir un modèle quantifié entraîné ;
la réduction (130) de la largeur de bit de quantification initiale pour obtenir une première largeur de bit de quantification ; et
l'utilisation (140) de la première largeur de bit de quantification comme largeur de bit de quantification initiale et l'utilisation du modèle quantifié entraîné comme modèle initial, et le retour à la réalisation de la quantification du modèle initial selon la largeur de bit de quantification initiale pour obtenir le modèle quantifié, jusqu'à ce que la première largeur de bit de quantification atteigne un premier seuil et la détermination du modèle quantifié entraîné correspondant à la première largeur de bit de quantification qui atteint le premier seuil comme modèle quantifié entièrement entraîné,
dans lequel l'utilisation (120) du modèle initial comme modèle enseignant du modèle quantifié, et la réalisation d'un entraînement par distillation sur le modèle quantifié pour obtenir le modèle quantifié entraîné, comprend :
l'entrée (121) d'un échantillon d'entraînement dans le modèle quantifié et le modèle initial, pour obtenir un premier résultat de prédiction délivré par le modèle quantifié et un second résultat de prédiction délivré par le modèle initial ;
la détermination (122) d'une première perte entre le premier résultat de prédiction et une étiquette de vérité terrain correspondant à l'échantillon d'entraînement, et la détermination d'une deuxième perte entre le premier résultat de prédiction et le second résultat de prédiction ;
la détermination (1231) d'une troisième perte entre une première sortie d'une couche intermédiaire de modèle quantifié et une seconde sortie d'une couche intermédiaire du modèle initial ;
la construction (123, 1232) d'une fonction de perte totale sur la base de la première perte, d'un produit de la deuxième perte et d'un premier paramètre adaptatif, et d'un produit de la troisième perte et d'un second paramètre adaptatif, dans lequel le premier paramètre adaptatif et le second paramètre adaptatif sont liés à un gradient du modèle initial, et le premier paramètre adaptatif est configuré pour ajuster de manière dynamique l'amplitude de la deuxième perte, et le second paramètre adaptatif est configuré pour ajuster de manière dynamique l'amplitude de la troisième perte ; et
l'ajustement (124) d'un paramètre du modèle quantifié sur la base de la fonction de perte totale, pour obtenir le modèle quantifié entraîné,
dans lequel le premier paramètre adaptatif et le second paramètre adaptatif sont déterminés par les étapes suivantes :
la détermination (401) d'une première amplitude de descente de gradient correspondant au modèle quantifié, sur la base d'une valeur de différence entre une première valeur de gradient maximale et une première valeur de gradient minimale d'une première valeur de gradient du modèle quantifié ;
la détermination (402) d'une seconde amplitude de descente de gradient correspondant au modèle initial, sur la base d'une valeur de différence entre une seconde valeur de gradient maximale et une seconde valeur de gradient minimale d'une seconde valeur de gradient du modèle initial ; et
la détermination (403) du premier paramètre adaptatif et du second paramètre adaptatif sur la base d'un rapport entre la première amplitude de descente de gradient et la seconde amplitude de descente de gradient.
